# EUROPÄISCHE PATENTSCHRIFT

(11) **EP 3 878 641 B1**
(45) Veröffentlichungstag und Bekanntmachung des Hinweises auf die Patenterteilung: **21.08.2024**
(21) Anmeldenummer: 21155036.3
(22) Anmeldetag: 03.02.2021
(51) Int. Cl.: B32B 3/20, B32B 3/26, B32B 7/12, B32B 27/04, B32B 27/08, B60R 16/02, H02G 3/00, H02G 3/04, H05K 7/14

(54) **VERBUNDPLATTE MIT KABELKANAL**
COMPOSITE PANEL WITH CABLE DUCT
PLAQUE COMPOSITE POURVU DE CANAL DE CÂBLE

(30) Priorität: 12.03.2020 DE 102020106854
(43) Veröffentlichungstag der Anmeldung: 15.09.2021
(73) Patentinhaber: Elbe Flugzeugwerke GmbH, 01109 Dresden (DE)
(72) Erfinder: Graf, Sebastian, 01109 Dresden (DE); Reißenweber, Uwe, 01109 Dresden (DE); Köllner, Markus, 01109 Dresden (DE); Symank, Holger, 01109 Dresden (DE); Wolf, Johannes, 01109 Dresden (DE); Nitsche, Steffen, 01109 Dresden (DE)
(74) Vertreter: LKGLOBAL Lorenz & Kopf Patentanwalt Attorney at Law PartG mbB

(56) Entgegenhaltungen:
- DATABASE WPI Week 2020, Derwent World Patents Index; AN 2020-06326N, XP002803436

## Beschreibung

### Technisches Gebiet

Die vorliegende Beschreibung betrifft im Allgemeinen Verbundplatten mit Kabelkanälen bzw. allgemein Verbundplatten mit Hohlräumen zum Aufnehmen und Führen von Leitungen oder eines Mediums.

### Technischer Hintergrund

Verbundplatten bestehen im Allgemeinen aus einem Kern oder einer Kernschicht und zwei Deckschichten. Die Kernschicht ist zwischen den beiden Deckschichten angeordnet und mit diesen verklebt. Die Kernschicht ist bevorzugt als Wabenstruktur ausgestaltet. Die Wabenstruktur kann verstärkt sein, beispielweise mit einem Harz getränkt. Die Deckschichten sind mit der Kernschicht verklebt. Auf diese Weise wird eine Verbundplatte mit einem sehr guten Festigkeits-GewichtsVerhältnis bereitgestellt, d.h. die Verbundplatte weist eine hohe mechanische Festigkeit bei einem sehr niedrigen Gewicht auf. Somit eignen sich solche Verbundplatten insbesondere für die Verwendung im Leichtbau, beispielsweise im Fahrzeugbau, insbesondere dem Luftfahrzeugbau.

Der allgemeine Aufbau einer solchen Verbundplatte mit Kernschicht und zwei Deckschichten auf gegenüberliegenden Seiten der Kernschicht ist beispielsweise in DE 20 2018 107 378 U1 gezeigt.

Beispielsweise werden Verbundplatten im Luftfahrzeugbau als Boden- oder Wandpanel verwendet. Es kann gefordert sein, einen Führungsschacht oder Kanal in einer Verbundplatte bereitzustellen, um elektrische Leitungen oder allgemein Kabel oder Leitungen durch die Verbundplatte zu führen. Damit ein Kanal in einer Verbundplatte nicht zu einer übermäßigen strukturellen Schwächung führt, müssen besondere Maßnahmen um den Kanal herum getroffen werden.

CN 110 649 533 A beschreibt eine Kabelkanalvorrichtung, mit einem Befestigungsblock, dessen Enden mit einer Anschlussplatte verbunden sind, eine Anschlussplatte, deren oberes Ende und unteres Ende mit einer Anschlussnut versehen ist, und eine Abschlussplatte, deren beide Enden mit dem Anschlussblock verbunden sind. Die Vorrichtung hat einen Befestigungsblock, dessen oberes Ende und unteres Ende mit mehreren Kabelschnallen verbunden ist, die mit einer C-förmigen Streifenschnalle verbunden ist, wobei die Kabelschnalle größer ist als eine Öffnungsbreite der C-förmigen Streifenschnalle. Die beiden Enden des Befestigungsblocks sind mit einer Verbindungsplatte verbunden. Ein oberes Ende und das untere Ende der Verbindungsplatte sind mit einer Verbindungsnut ausgebildet. Zwei Enden einer Schließplatte sind mit einem Verbindungsblock verbunden. Ein Gleitkern wird auf einen Kabelkanal aufgesetzt. Eine innere Seitenwand eines Drehkörpers ist mit einer Gummischicht befestigt, die mit einem Gummiblumenmuster fixiert ist.

### Beschreibung

Es kann als Aufgabe betrachtet werden, den Aufwand für das Integrieren von Leitungskanälen in eine Verbundplatte zu reduzieren.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem ersten Aspekt ist eine Verbundplatte aufweisend eine Kernschicht, eine erste Deckschicht und eine zweite Deckschicht sowie einen Kabelkanal angegeben. Die Kernschicht ist zwischen der ersten Deckschicht und der zweiten Deckschicht angeordnet und mit der ersten Deckschicht und der zweiten Deckschicht verbunden. Ein Hohlraum erstreckt sich in der Kernschicht, wobei der Kabelkanal in dem Hohlraum angeordnet ist und wobei der Kabelkanal eine erste Seitenfläche und eine der ersten Seitenfläche gegenüberliegende zweite Seitenfläche aufweist, wobei die erste Seitenfläche mit der ersten Deckschicht verbunden ist und wobei die zweite Seitenfläche mit der zweiten Deckschicht verbunden ist. Der Hohlraum erstreckt sich von einer ersten Kante (Eintrittskante) der Verbundplatte zu einer zweiten Kante (Austrittskante) der Verbundplatte. Der Kabelkanal stellt eine Führung von der Eintrittskante zu der Austrittskante bereit. Die gesamte erste Seitenfläche liegt an der ersten Deckschicht an. Die gesamte zweite Seitenfläche liegt an der zweiten Deckschicht an.

Bei der Verbundplatte handelt es sich erfindungsgemäß um eine Leichtbauplatte mit einem sehr leichten Kern, der zwischen zwei Decklagen angeordnet ist. Der Kern besteht aus einem sehr leichten Material und ist ausgelegt, Druckkräfte in Richtung der Normalen der Verbundplatte sowie aus einer Durchbiegung in Folge solcher Druckkräfte resultierende Kräfte (Schubkräfte) aufzunehmen. Der Kern kann beispielsweise eine Wabenstruktur oder ein Kunststoffschaum sein. Die Decklagen nehmen Zug- und Druckkräfte in der Ebene der Verbundplatte auf. Somit kann eine Verbundplatte bei einem sehr niedrigen Eigengewicht sehr hohen Belastungen standhalten.

In der Kernschicht ist ein Hohlraum angeordnet, der einem vorgegebenen Verlauf folgt. Der Hohlraum kann einen linearen oder gekrümmten Verlauf haben und erstreckt sich von einer Kante (Eintrittskante) der Verbundplatte zu einer anderen Kante (Austrittskante) der Verbundplatte. Der Hohlraum ist eine Ausnehmung in der Kernschicht und erstreckt sich entlang der Plattenebene.

In dem Hohlraum ist ein Kabelkanal angeordnet. Der Kabelkanal dient dazu, eine Führung innerhalb der Verbundplatte von der Eintrittskante zu der Austrittskante bereitzustellen. Die Führung kann genutzt werden, um Leitungen (beispielsweise elektrische pneumatische, hydraulische Leitungen) oder ein Medium (beispielsweise ein Gas oder ein Fluid) von der Eintrittskante zu der Austrittskante durch die Verbundplatte zu führen.

Zwei gegenüberliegende Seitenflächen des Kabelkanals sind mit den einander gegenüberliegenden Deckschichten der Verbundplatte verbunden, beispielsweise verklebt. Das heißt, dass sich der Kabelkanal zwischen den Deckschichten über die gesamte Höhe der Kernschicht erstreckt. Der Kabelkanal ist also nur seitlich von der Kernschicht umgeben bzw. grenzt hieran nur seitlich an.

Erfindungsgemäß ist der Kabelkanal ein Vierkantrohr, das in die Verbundplatte integriert ist. In dem Vierkantrohr können dann Leitungen oder ein Medium transportiert werden.

Gemäß einer Ausführungsform ist die erste Seitenfläche unmittelbar mit der ersten Deckschicht verklebt und die zweite Seitenfläche ist unmittelbar mit der zweiten Deckschicht verklebt.

Durch diesen Aufbau behält die Verbundplatte eine höchstmögliche strukturelle Festigkeit.

Gemäß einer weiteren Ausführungsform ist die erste Seitenfläche und die zweite Seitenfläche planar.

Somit liegen die erste und die zweite Seitenfläche flächig an jeweils einer Deckschicht an. Erfindungsgemäß liegt die gesamte erste Seitenfläche und die gesamte zweite Seitenfläche an der jeweiligen Deckschicht an.

Gemäß einer weiteren Ausführungsform hat der Kabelkanal einen rechteckigen Querschnitt, wobei eine dritte Seitenfläche die erste Seitenfläche und die zweite Seitenfläche verbindet, wobei eine vierte Seitenfläche der dritten Seitenfläche gegenüberliegt und die erste Seitenfläche und die zweite Seitenfläche verbindet, und wobei die dritte Seitenfläche und die vierte Seitenfläche mit der Kernschicht verklebt sind.

Der Kabelkanal kann in einer Ausführungsform einen quadratischen Querschnitt haben. Die an der Kernschicht anliegenden Seitenflächen (die dritte und die vierte Seitenfläche) müssen nicht zwingend planar sein. Vielmehr können diese Seitenflächen auch gekrümmt sein.

Gemäß einer weiteren Ausführungsform weist der Kabelkanal einen ersten Längsabschnitt und einen zweiten Längsabschnitt auf.

Der Kabelkanal kann aus einer Mehrzahl von Abschnitten zusammengesetzt sein. Somit kann ein modulares Konzept für den Kabelkanal umgesetzt werden. Der erste Längsabschnitt kann linear verlaufen, ebenso der zweite Längsabschnitt. Insbesondere kann der Kabelkanal aus einer Mehrzahl von linearen Längsabschnitten zusammengesetzt werden, wobei zwischen den linearen Längsabschnitten einzelne Kopplungselemente angeordnet sind, welche jeweils zwei Längsabschnitte miteinander verbinden. Die Kopplungselemente können auch gewinkelt oder gebogen sein, so dass der Kabelkanal insgesamt einen gewünschten Verlauf innerhalb der Verbundplatte abbilden kann.

Gemäß einer weiteren Ausführungsform weist die Verbundplatte weiterhin einen Knieverbinder auf, wobei der Knieverbinder mit dem ersten Längsabschnitt und dem zweiten Längsabschnitt verbunden ist.

Bei dem Knieverbinder handelt es sich um eine Variante des oben angesprochenen und zwischen zwei Längsabschnitten angeordneten Kopplungselements. Der Knieverbinder ist gebogen oder gekrümmt, so dass die beiden mit den Knieverbinder verbundenen Längsabschnitte einen Knick formen.

Gemäß einer weiteren Ausführungsform weist der Knieverbinder einen ersten Verbindungsabschnitt, einen zweiten Verbindungsabschnitt und einen zwischen dem ersten Verbindungsabschnitt und dem zweiten Verbindungsabschnitt angeordneten Mittelabschnitt auf, wobei der erste Verbindungsabschnitt mit dem ersten Längsabschnitt verbunden ist und der zweite Verbindungsabschnitt mit dem zweiten Längsabschnitt verbunden ist, wobei der erste Verbindungsabschnitt eine Mehrzahl von umlaufenden Ringen aufweist, welche sich in Umfangsrichtung um einen gesamten Umfang des Verbindungsabschnitts erstrecken.

Die Verbindungsabschnitte haben einen kleineren Außenumfang als der Mittelabschnitt, so dass die Verbindungsabschnitte in die miteinander zu verbindende Längsabschnitte des Kabelkanals eingesteckt werden können. Die Ringe haben die Funktion, die Verbindungsabschnitte mit einer Innenfläche der Längsabschnitte dicht zu verschließen, so dass beispielsweise ein flüssiger Kleber, welcher verwendet wird, um den Kabelkanal mit der Kernschicht und/oder den Deckschichten zu verkleben, nicht in den Kabelkanal eindringt und diesen für Leitungen unpassierbar macht oder ein Hindernis darstellt. Es können beispielsweise zwei oder mehr voneinander beabstandete Ringe an jedem Verbindungsabschnitt angeordnet sein. Die Ringe sind in Längsrichtung des Verbindungsabschnitts voneinander beabstandet.

Gemäß einer weiteren Ausführungsform weist die Verbundplatte weiterhin einen dritten Längsabschnitt auf, wobei der dritte Längsabschnitt quer zu dem ersten Längsabschnitt oder dem zweiten Längsabschnitt verläuft und damit verbunden ist.

Der dritte Längsabschnitt kann ebenfalls einen rechteckigen Querschnitt haben und der erste oder der zweite Längsabschnitt sind an den dritten Längsabschnitt an einer Seitenfläche des dritten Längsabschnitts angekoppelt. Hierzu kann eine Seitenfläche des dritten Längsabschnitts eine Öffnung aufweisen, welche beispielsweise dem Querschnitt des ersten oder zweiten Längsabschnitts entspricht.

Gemäß einer weiteren Ausführungsform ist in der Verbundplatte ein Faltschlitz angeordnet, entlang dessen die Verbundplatte um einen bestimmten Faltwinkel gefaltet ist, wobei der Kabelkanal quer zu dem Faltschlitz verläuft und wobei an einem Kreuzungspunkt des Faltschlitzes mit dem Kabelkanal ein Faltlinienverbinder angeordnet ist, der den Kabelkanal von dem Faltschlitz separiert.

In bestimmten Anwendungsfällen kann es gewünscht sein, dass die Verbundplatte nicht nur ein planares Element ist, sondern eine oder mehrere Faltungen enthält. Eine Faltung verläuft entlang einer Faltlinie. Typischerweise wird entlang der Faltlinie ein Faltschlitz angebracht, beispielsweise indem ein Teil einer Deckschicht und der Kernschicht entfernt wird, z.B. durch Fräsen. Die Verbundplatte kann dann um die zweite Deckschicht gefaltet werden. Die Breite des Faltschlitzes hat Einfluss auf den Faltwinkel. Der Faltschlitz kann zwei Verbundplattenabschnitte voneinander trennen und ermöglicht es, dass ein erster Verbundplattenabschnitt auf einer Seite des Faltschlitzes mit Bezug zu einem zweiten Verbundplattenabschnitt auf der anderen Seite des Faltschlitzes geknickt oder geschwenkt wird.

Es kann erforderlich sein, einen Kabelkanal durch einen Faltschlitz zu führen, also von dem ersten Verbundplattenabschnitt in den zweiten Verbundplattenabschnitt. Dies wird ermöglicht, indem ein Faltlinienverbinder in den Faltschlitz eingebracht wird und in den beiden Verbundplattenabschnitten jeweils ein Längsabschnitt des Kabelkanals bis zu dem Faltlinienverbinder verläuft und sich hieran anschließt.

Gemäß einer weiteren Ausführungsform ist in einer Oberfläche der ersten Deckschicht eine Vertiefung mit einer Auflagefläche angeordnet und ein Kragen des Faltlinienverbinders liegt in der Vertiefung auf der Auflagefläche auf und schließt mit der Oberfläche der ersten Deckschicht bündig ab.

Zusammengefasst und als abschließendes Beispiel wird eine Verbundplatte mit einem modularen Kabelkanal beschrieben. Der Kabelkanal erstreckt sich durch die Verbundplatte und weist beispielsweise lineare Längsabschnitte, Knieverbinder und Faltlinienverbinder auf. Hierdurch kann ein gewünschter Verlauf des Kabelkanals in der Verbundplatte dargestellt werden. Weiterhin ist der Kabelkanal auf beliebige Geometrien der Verbundplatte anpassbar.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: eine schematische Darstellung eines Kabelkanals.
- **Fig. 2**: eine schematische Darstellung einer Verbundplatte.
- Fig. 3: eine schematische Darstellung eines Kabelkanals.
- Fig. 4: eine schematische Darstellung eines Knieverbinders.
- Fig. 5: eine schematische Darstellung einer Verbindung zwischen einem Längsabschnitt und einem Knieverbinder.
- Fig. 6: eine schematische Darstellung einer Verbundplatte mit einem Hohlraum in einem ungefalteten Zustand der Verbundplatte.
- Fig. 7: eine schematische Darstellung einer Verbundplatte mit einem Kabelkanal.
- Fig. 8: eine schematische Darstellung einer Verbundplatte.
- Fig. 9: eine schematische Darstellung einer Verbundplatte mit Faltschlitz in einem ungefalteten Zustand der Verbundplatte.
- Fig. 10: eine schematische Darstellung einer Verbundplatte mit Faltschlitz und Faltlinienverbinder in einem ungefalteten Zustand der Verbundplatte.
- Fig. 11: eine schematische Darstellung einer Verbundplatte mit Faltschlitz und Faltlinienverbinder in einem ungefalteten Zustand der Verbundplatte.
- Fig. 12: eine schematische Darstellung einer Verbundplatte mit Faltschlitz und Faltlinienverbinder.
- Fig. 13: eine schematische Darstellung eines Faltlinienverbinder.
- Fig. 14: eine schematische Darstellung einer Verbundplatte mit einem beispielhaften Verlauf von Hohlräumen für einen Kabelkanal und einer darin verlaufenden Leitung.

### Detaillierte Beschreibung von Ausführungsbeispielen

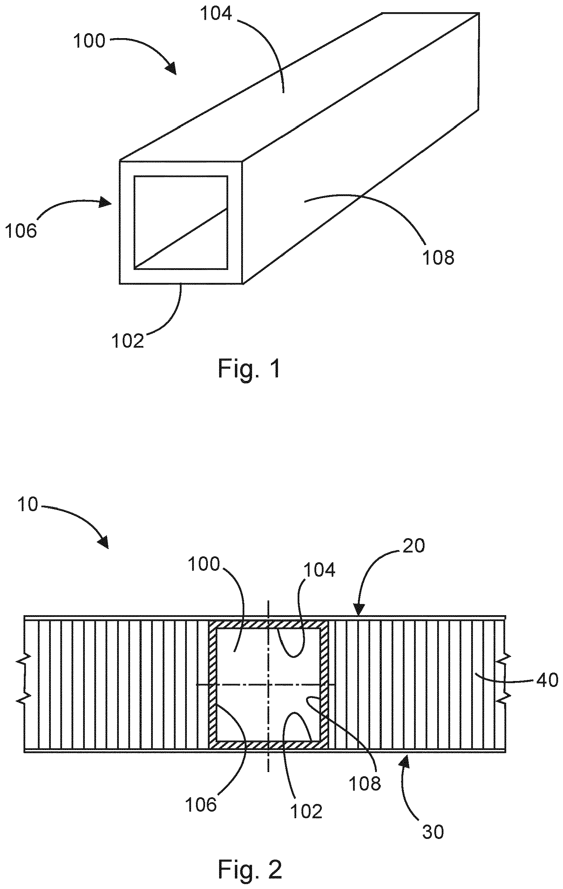

Fig. 1 zeigt einen Kabelkanal 100. Der Kabelkanal 100 ist als Vierkantrohr mit rechteckigem Querschnitt ausgestaltet. Der Kabelkanal 100 wird gebildet von vier Seitenwänden 102, 104, 106, 108. In diesem Beispiel verläuft der Kabelkanal linear. Wie im Folgenden beschrieben, können mehrere lineare Abschnitte mit Hilfe von gekrümmten Koppelelementen verbunden werden, um einen gewünschten Verlauf des gesamten Kabelkanals innerhalb einer Verbundplatte zu ermöglichen.

Der Kabelkanal 100 kann aus einem Kunststoff hergestellt sein. Bevorzugt ist der Kabelkanal aus einem faserverstärkten Kunststoff hergestellt. Alternativ kann der Kabelkanal 100 aus harzgetränkten Glasfasern hergestellt sein. Die Außenflächen des Kabelkanals können eine vorgegebene Rauheit aufweisen. Dies kann für das Verkleben des Kabelkanals mit den Deckschichten und der Kernschicht vorteilhaft sein.

Fig. 2 zeigt eine Schnittdarstellung einer Verbundplatte 10 mit einer Kernschicht 40, welche zwischen zwei planaren Deckschichten 20, 30 angeordnet und mit diesen verbunden, beispielsweise verklebt, ist. Der Kabelkanal ist auch mit der Kernschicht verbunden, beispielsweise verklebt. Die erste Seitenfläche 102 ist mit der unteren Deckschickt 30 verklebt. Die zweite Seitenfläche 104 ist mit der oberen Deckschicht 20 verklebt. Die dritte Seitenfläche 106 ist mit der Kernschicht verklebt. Die vierte Seitenfläche 108 ist mit der Kernschicht verklebt.

Wie der Fig. 2 entnommen werden kann, entspricht die Höhe des Kabelkanals 100 dem Abstand zwischen den Deckschichten 20, 30 und somit der Höhe der Kernschicht 40. Zwischen den Seitenflächen 106, 108 und der Kernschicht ist ebenfalls eine Klebeschicht (nicht dargestellt) angeordnet, um den Kabelkanal 100 mit der Kernschicht zu verkleben.

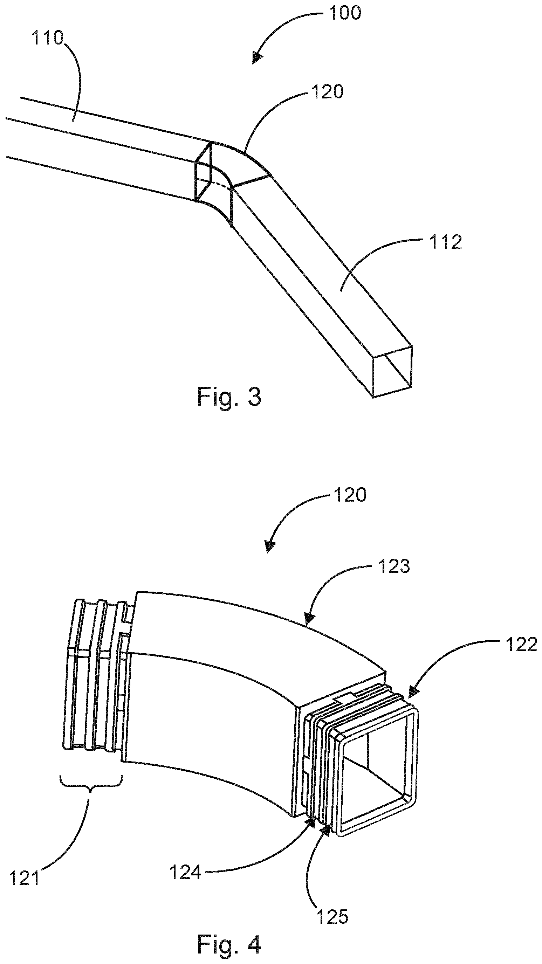

Fig. 3 zeigt einen Kabelkanal 100 mit zwei linearen Längsabschnitten 110, 112, welche mittels eines Knieverbinders 120 miteinander verbunden sind. Somit kann aus mehreren linearen Längsabschnitten ein Kabelkanal mit einer gewünschten Form oder einem gewünschten Verlauf innerhalb einer Verbundplatte hergestellt werden. Auch wenn in Fig. 3 zwei Längsabschnitte 110, 112 und ein Knieverbinder 120 gezeigt sind, kann der Kabelkanal aus einer Vielzahl von linearen Längsabschnitten und jeweils dazwischen angeordneten Knieverbindern hergestellt sein.

Fig. 4 zeigt eine Detailansicht des Knieverbinders 120. Der Knieverbinder 120 weist einen ersten Verbindungsabschnitt 121, einen zweiten Verbindungsabschnitt 122 und einen dazwischen angeordneten Mittelabschnitt 123 auf. Der Knieverbinder ist aus Kunststoff hergestellt, beispielsweise mittels eines 3D-Druckverfahrens, und ist bevorzugt ein einstückiges Element. Der Knieverbinder ist im Wesentlichen starr und behält seine Form bei, solange er nicht über die Festigkeitsgrenzen des Materials hinaus beansprucht wird. Der Knieverbinder folgt einem gleichmäßigen Krümmungsradius, kann allerdings auch eine elliptische oder ovale Form haben, bei der sich der Krümmungswert zwischen den beiden Enden des Knieverbinders verändert. Die Knieverbinder können mit einem gewünschten Krümmungsradius oder Krümmungsverlauf hergestellt werden.

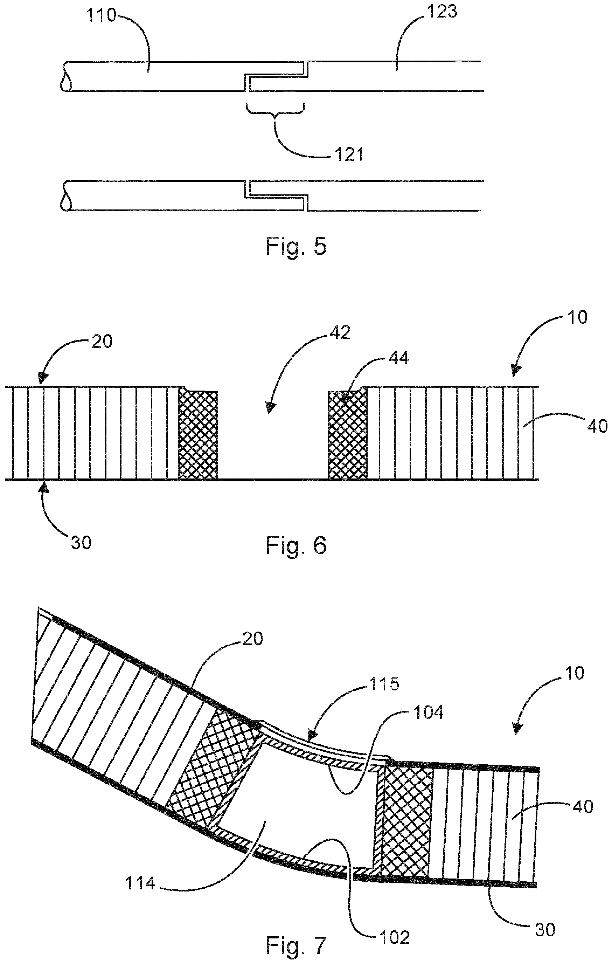

In einer Variante hat der Krümmungsverbinder in seinem Inneren hat einen gleichbleibenden Querschnitt, d.h. es gibt keine abrupten Änderungen (im Sinne von Vorsprüngen, die sich aus der Wand in Richtung Innenraum erstrecken) der den Innenraum umgebenden Wände. Die Verbindungsabschnitte haben im Vergleich zu dem Mittelabschnitt eine geringere Wandstärke. Unter der Maßgabe eines gleichbleibenden Querschnitts des Innenraums ist damit der Außenumfang der Verbindungsabschnitte kleiner als der Außenumfang des Mittelabschnitts. Diese Ausgestaltung vereinfacht es, den Knieverbinder mit den Längsabschnitten 110, 112 zu verbinden. Eine Variante hierfür wird in Fig. 5 gezeigt.

An den Verbindungsabschnitten sind mehrere Ringe 124, 125 angeordnet. Hierbei handelt es sich um Materialvorsprünge, welche sich als geschlossener Ring um den gesamten Außenumfang des Verbindungsabschnitts in Umfangsrichtung erstrecken. Die Ringe 124, 125 sind in Längsrichtung des Kabelkanals voneinander beabstandet. Wenn ein Verbindungsabschnitt 121, 122 in einem Längsabschnitt 110, 112 des Kabelkanals eingesteckt ist, bilden sich zwischen den Ringen und der Innenwand eines Längsabschnitts kleine Hohlräume. Diese Hohlräume können dazu dienen, einen Flüssigkleber oder ein Harz, mit welchem ein Kabelkanal in der Verbundplatte umgossen wird, aufzunehmen. Soweit Kleber oder Harz an der Verbindungsstelle zwischen Knieverbinder und Längsabschnitt eindringt, härtet dieser in den Hohlräumen zwischen den Ringen 124, 125 aus und dichtet somit den Innenraum des Kabelkanals gegen weiteres Eindringen von Kleber oder Harz ab.

Fig. 5 zeigt eine Variante einer Verbindung zwischen dem Verbindungsabschnitt 121 eines Knieverbinders und einem Längsabschnitt 110. Aus Gründen der Übersichtlichkeit sind in Fig. 5 nicht alle Details des Knieverbinders gezeigt. Jedoch sollte verstanden werden, dass es sich bei dem Verbindungsabschnitt 121 und dem Mittelabschnitt 123 um Bestandteile des Knieverbinders 120 aus Fig. 4 oder eines Knieverbinders gemäß irgendeiner Ausführungsform handeln kann.

Die Wandstärke des Verbindungsabschnitts 121 ist im Vergleich zu der Wandstärke des Mittelabschnitts 123 reduziert, so dass der Außenumfang des Verbindungsabschnitts 121 kleiner ist als der Außenumfang des Mittelabschnitts 123. Umgekehrt ist in dem Endbereich des Längsabschnitts 110, in welchen der Verbindungsabschnitt eingesteckt wird, eine Aufweitung des Innenquerschnitts des Längsabschnitts zu erkennen. Der Verbindungsabschnitt wird in diesen aufgeweiteten Bereich des Längsabschnitts eingesteckt. Somit können sprungartige Veränderungen des Innenquerschnitts des montierten Kabelkanals vermieden werden.

Es ist selbstverständlich auch möglich, einen Endabschnitt des Verbindungsabschnitts zum Ende hin konisch zulaufen zu lassen und in einen Längsabschnitt des Kabelkanals mit gleichbleibendem Innenquerschnitt einzustecken. Somit verändert sich zwar der Innenquerschnitt des Kabelkanals, allerdings nicht sprunghaft.

Fig. 6 zeigt eine Verbundplatte 10, die für das Einlegen eines Kabelkanals oder eines Längsabschnitts vorbereitet ist. Bei der Verbundplatte 10 handelt es sich um eine Verbundplatte wie schon mit Bezug zu Fig. 2 beschrieben, so dass auf eine erneute Beschreibung der dort beschriebenen Elemente verzichtet wird.

Die Deckschicht 20 ist örtlich begrenzt entfernt, z.B. durch Fräsen. Gleiches gilt für die Kernschicht 40, so dass ein von außen zugänglicher Hohlraum 42 gebildet wird. Der Hohlraum wird seitlich, also zu der Kernschicht 40 hin, mit Füllmaterial 44 ausgelegt. Bei diesem Füllmaterial 44 kann es sich um Klebematerial handeln, welches den Kabelkanal mit der Kernschicht verklebt. Durch diese Vorbereitung der Verbundplatte kann es ermöglicht werden, eine Faltung oder Knickung der Verbundplatte entlang des Hohlraums 42 vorzunehmen, wie in Fig. 7 gezeigt.

Fig. 7 zeigt die Verbundplatte 10 mit einem in den Hohlraum 42 eingeführten Längsabschnitt 114. Der Längsabschnitt 114 hat einen im Wesentlichen trapezförmigen Querschnitt. Die Seitenfläche 102, welche der unteren Deckschicht 30 zugewandt und mit dieser verklebt ist, ist länger als die gegenüberliegende Seitenfläche 104. Die Seitenflächen 102, 104 sind gemäß einem vorgegebenen Krümmungsradius gekrümmt. In dem Beispiel der Fig. 7 ist die Seitenfläche 104 von einer Oberflächenlage 115 bedeckt. Dies ist aber eine optionale Ausgestaltung und die Oberflächenlage 115 kann beispielsweise nur verwendet werden, wenn es die auf die erste Deckschicht 20 aufgebrachten Lasten erfordern.

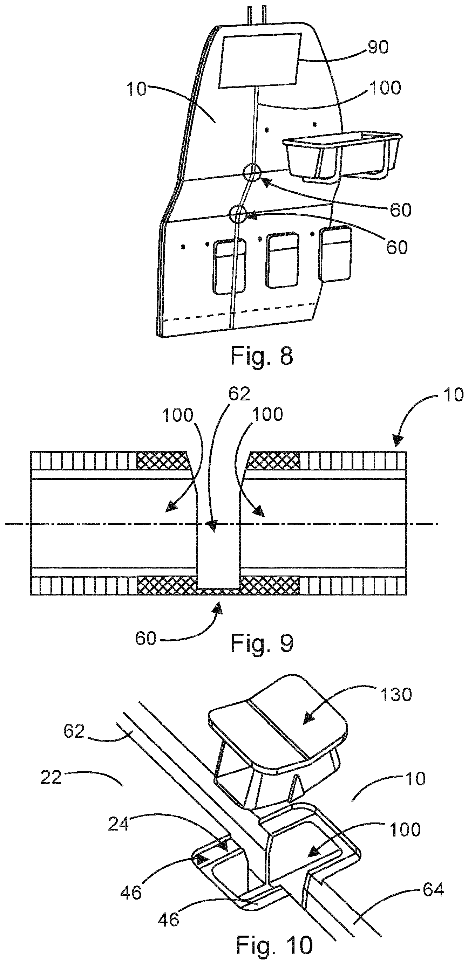

Fig. 8 zeigt eine Verbundplatte 10, welche an zwei Stellen gefaltet bzw. geknickt ist. Ein Kabelkanal 100 verläuft in diesem Beispiel senkrecht durch die Verbundplatte 10. So kann beispielsweise ein Verbraucher 90 (in diesem Fall ein Monitor) in einem oberen Bereich der Verbundplatte 10 mit elektrischer Energie über ein durch den Kabelkanal 100 verlaufendes Kabel versorgt werden. Der Kabelkanal erstreckt sich in vertikaler Richtung und passiert die beiden Faltlinien 60. An der Verbundplatte können weitere Elemente angebracht sein, die aber für den Kabelkanal nicht zwingend relevant sind.

Fig. 9 zeigt die Ausgestaltung des Verbundplatte 10 an einer Faltlinie 60 und im Bereich eines Kabelkanals. Ein Hohlraum mit teilweise schräg verlaufenden Seitenflächen wird in die Verbundplatte eingebracht, z.B. eingefräst. Dieser Hohlraum kann auch als Faltschlitz 62 bezeichnet werden und ermöglicht es, die Verbundplatte an dieser Stelle zu falten bzw. zu knicken. Wenn die Verbundplatte gefaltet wird, liegen die schräg verlaufenden Abschnitt der Seiten des Hohlraums flächig aneinander. An dieser Stelle können die Seiten dann verklebt werden. Die Breite des Hohlraums und der Neigungswinkel der schräg verlaufenden Seiten geben den Faltwinkel der Verbundplatte vor. In der Verbundplatte verläuft quer zu der Faltlinie ein Kabelkanal 100. Durch diesen Kabelkanal 100 kann auch nach dem Falten der Verbundplatte eine Leitung geführt werden.

Vor dem Falten der Verbundplatte 10 wird in den Faltschlitz 62 ein flüssiger Kleber eingebracht. Dieser Kleber darf nicht in den Kabelkanal 100 eindringen, ansonsten härtet er dort aus und kann das Einführen von Kabeln verhindern oder mindestens erschweren. Um das Eindringen von Kleber aus dem Faltschlitz 62 in den Kabelkanal 100 zu verhindern, wird an der Stelle des Kabelkanals 100 ein Faltlinienverbinder 130 platziert, wie in Fig. 10 gezeigt.

Fig. 10 zeigt eine perspektivische Ansicht auf eine Verbundplatte 10 mit Faltschlitz 62 und Kabelkanal 100. Die angeschrägten Verbindungsflächen 64 des Faltschlitzes sind ebenfalls gezeigt. An der Kreuzungsstelle zwischen dem Faltschlitz 62 und dem Kabelkanal 100 wird ein Faltlinienverbinder 130 eingebracht. Der Faltlinienverbinder 130 ist bevorzugt ein einstückiges Element, welches gewinkelt ist und dem beabsichtigten Faltwinkel der Verbundplatte 10 nach dem Faltvorgang entspricht. Der Faltlinienverbinder 130 hat eine kanalartige Verbindung, welche den Kabelkanal 100 quer zu dem Faltschlitz 62 verbindet. Ebenso dichtet der Faltlinienverbinder 130 den Kabelkanal 100 gegen das Eindringen von Klebstoff ab, wenn Klebstoff in den Faltschlitz 62 gefüllt wird.

Eine Oberfläche 22 der ersten Deckschicht der Verbundplatte 10 hat eine Ausnehmung oder Vertiefung 24 an dem Kreuzungspunkt zwischen Faltschlitz 62 und Kabelkanal 100. Am Boden dieser Vertiefung 24 befindet sich eine Auflagefläche 46. Die Vertiefung 24 dient dazu, dass der Faltlinienverbinder 130 nicht über die Oberfläche 22 herausragt. Der Faltlinienverbinder 130 kann mit der Auflagefläche 46 verklebt und in Position gehalten werden.

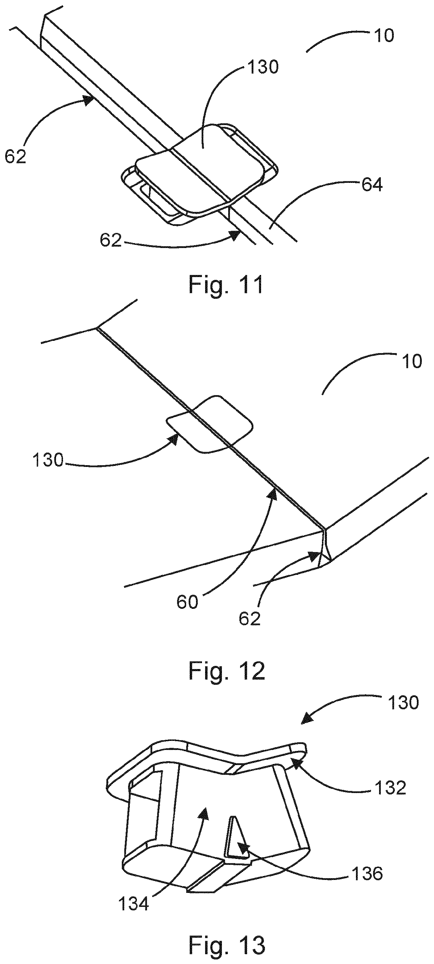

Fig. 11 zeigt eine Verbundplatte 10 mit Faltschlitz 62, in welchen der Faltlinienverbinder 130 eingesetzt ist. Nun kann Klebstoff in den Faltschlitz 62 eingefüllt und die Verbundplatte in den gewünschten gefalteten Zustand gebracht werden.

Fig. 12 zeigt die Verbundplatte der Fig. 11 nach dem Falten. Die Verbindungsflächen 64 berühren einander und formen eine Faltlinie 60 und der Faltschlitz 62 bildet lediglich im Bereich seiner unteren Seite einen mit Klebstoff gefüllten Raum. Der Faltungswinkel der Verbundplatte 10 entspricht dem Winkel des Faltlinienverbinders, welcher sich in die Oberfläche der Verbundplatte integriert.

Fig. 13 zeigt eine Detaildarstellung des Faltlinienverbinders 130. Der Faltlinienverbinder 130 weist Seitenflächen 134 auf, welche den Kabelkanal gegenüber dem Faltschlitz abdichten. Der Faltlinienverbinder 130 weist einen umlaufenden Kragen 132 auf, welcher auf der Auflagefläche 46 (siehe Fig. 10) aufliegt. Weiterhin ist an der Seitenfläche 134 (an beiden Seitenflächen) eine dreieckförmige Erhebung (auch: Keil 136) angebracht. Der Keil 136 dichtet den Faltschlitz 62 nach dem Faltvorgang der Verbundplatte 10 ab. Wie in Fig. 12 zu sehen ist, formt der Faltschlitz 62 nach dem Falten der Verbundplatte ebenfalls ein Dreieck, welches in Form und Größe im Wesentlichen dem Keil 136 entspricht. Die Seitenflächen 134 dienen auch als Klebefläche.

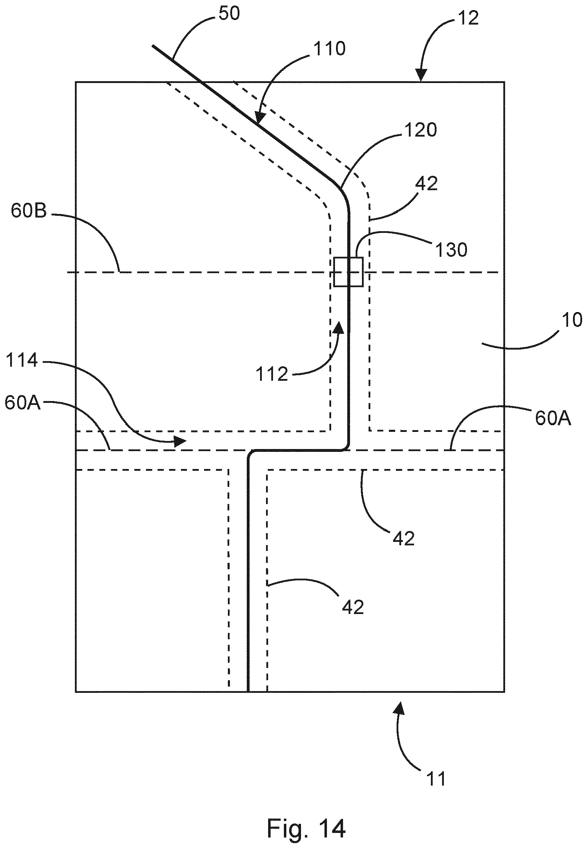

Fig. 14 zeigt beispielhaft die Modularität des Kabelkanals 100 in Verbindung mit einer Verbundplatte 10. Der Übersichtlichkeit halber ist in Fig. 14 nicht der Kabelkanal, sondern die Hohlräume 42 in der Verbundplatte gezeigt. Die Hohlräume sind mit gestrichelten Linien gezeigt.

In Fig. 14 von unten nach oben erstreckt sich zunächst ein linearer Hohlraum senkrecht nach oben. In diesen Hohlraum wird typischerweise ein einzelner linearer Längsabschnitt eines Kabelkanals, wie in Fig. 1 gezeigt, eingebracht. In diesen linearen Hohlraum kann auch einer der Längsabschnitte 110, 112 aus Fig. 3 eingebracht werden. Der erste senkrechte Hohlraum trifft auf einen horizontal verlaufenden Hohlraum. In den horizontal verlaufenden Hohlraum kann ein Längsabschnitt 114 wie in Fig. 7 gezeigt eingebracht werden. Mit etwas seitlichem Versatz zu dem ersten vertikal verlaufenden Hohlraum schließt sich ein zweiter vertikal verlaufender Hohlraum an den horizontal verlaufenden Hohlraum an. In dem zweiten vertikal verlaufenden Hohlraum kann ein Längsabschnitt 112 wie in Fig. 3 gezeigt angeordnet werden. Sodann schließt sich ein gekrümmter Abschnitt und ein weiterer linear verlaufender Hohlraum an. In dem gekrümmten Abschnitt ist typischerweise ein Knieverbinder 120 angeordnet, an den sich ein weiterer Längsabschnitt 110 anschließt. Auf diese Weise kann eine Leitung 50 von der unteren Kante 11 zu der oberen Kante 12 geführt werden. Selbstverständlich ist es möglich, dass die Leitung 50 auch an einem Auslasspunkt zwischen der unteren Kante 11 und der oberen Kante 12 aus der Verbundplatte herausgeführt wird.

Der horizontal verlaufende Hohlraum kann entlang einer ersten Faltlinie 60A angeordnet sein. Die erste Faltlinie 60A kennzeichnet eine Faltlinie der Verbundplatte 10, wie dies beispielhaft bereits in Fig. 8 gezeigt wird. Der horizontal verlaufende Hohlraum und der darin angeordnete Abschnitt des Kabelkanals kann dabei so ausgestaltet sein, wie mit Bezug zu Fig. 7 beschrieben.

Eine zweite Faltlinie 60B ist beabstandet von der ersten Faltlinie 60A angeordnet. Die zweite Faltlinie kreuzt den zweiten vertikal verlaufenden Hohlraum an einer Stelle, an welcher ein Faltlinienverbinder 130 angeordnet ist. Für Details zu dem Faltlinienverbinder 130 wird auf die Fig. 10 bis Fig. 13 sowie die zugehörige Beschreibung verwiesen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Verbundplatte
- 11: untere Kante
- 12: obere Kante
- 20: erste Deckschicht
- 22: Oberfläche
- 24: Vertiefung
- 30: zweite Deckschicht
- 40: Kernschicht
- 42: Hohlraum
- 44: Füllmaterial
- 46: Auflagefläche
- 50: Leitung
- 60: Faltlinie
- 62: Faltschlitz
- 64: Verbindungsfläche
- 90: Verbraucher
- 100: Kabelkanal
- 102: erste Seitenfläche
- 104: zweite Seitenfläche
- 106: dritte Seitenfläche
- 108: vierte Seitenfläche
- 110: erster Längsabschnitt
- 112: zweiter Längsabschnitt
- 114: dritter Längsabschnitt
- 115: Oberflächenlage
- 120: Knieverbinder
- 121: erster Verbindungsabschnitt
- 122: zweiter Verbindungsabschnitt
- 123: Mittelabschnitt
- 124: Ring
- 125: Ring
- 130: Faltlinienverbinder
- 132: Kragen
- 134: Seitenfläche
- 136: Keil

## Patentansprüche

1. Verbundplatte (10), aufweisend:
eine Kernschicht (40);
eine erste Deckschicht (20) und eine zweite Deckschicht (30);
einen Kabelkanal (100);
wobei die Kernschicht zwischen der ersten Deckschicht und der zweiten Deckschicht angeordnet und mit der ersten Deckschicht und der zweiten Deckschicht verbunden ist;
wobei die Verbundplatte (10) eine Leichtbauplatte ist und die Kernschicht (40) ausgelegt ist, Druckkräfte in Richtung der Normalen der Verbundplatte sowie aus einer Durchbiegung in Folge solcher Druckkräfte resultierende Kräfte aufzunehmen, und die erste und zweite Deckschicht (20, 30) ausgestaltet sind, Zug- und Druckkräfte in der Ebene der Verbundplatte aufzunehmen;
wobei sich ein Hohlraum (42) in der Kernschicht (40) erstreckt;
wobei der Kabelkanal (100) in dem Hohlraum (42) angeordnet ist;
wobei der Kabelkanal (100) eine erste Seitenfläche (102) und eine der ersten Seitenfläche gegenüberliegende zweite Seitenfläche (104) aufweist;
wobei die erste Seitenfläche (102) mit der ersten Deckschicht (20) verbunden ist;
wobei die zweite Seitenfläche (104) mit der zweiten Deckschicht (30) verbunden ist;
**dadurch gekennzeichnet, dass**
der Kabelkanal (100) als Vierkantrohr ausgestaltet und in der Verbundplatte integriert ist;
sich der Hohlraum (42) von einer ersten als Eintrittskante bezeichneten Kante (11) der Verbundplatte (10) zu einer zweiten als Austrittskante bezeichneten Kante (12) der Verbundplatte (10) erstreckt;
der Kabelkanal (100) eine Führung von der Eintrittskante zu der Austrittskante bereitstellt;
die gesamte erste Seitenfläche (102) an der ersten Deckschicht (20) anliegt;
die gesamte zweite Seitenfläche (104) an der zweiten Deckschicht (30) anliegt.

2. Verbundplatte (10) nach Anspruch 1,
wobei die erste Seitenfläche (102) unmittelbar mit der ersten Deckschicht (20) verklebt ist;
wobei die zweite Seitenfläche (30) unmittelbar mit der zweiten Deckschicht (30) verklebt ist.

3. Verbundplatte (10) nach Anspruch 1 oder 2,
wobei die erste Seitenfläche (102) und die zweite Seitenfläche (104) planar sind.

4. Verbundplatte (10) nach einem der vorhergehenden Ansprüche,
wobei der Kabelkanal (100) einen rechteckigen Querschnitt hat;
wobei eine dritte Seitenfläche (106) die erste Seitenfläche (102) und die zweite Seitenfläche (104) verbindet;
wobei eine vierte Seitenfläche (108) der dritten Seitenfläche (106) gegenüberliegt und die erste Seitenfläche (102) und die zweite Seitenfläche (104) verbindet;
wobei die dritte Seitenfläche (106) und die vierte Seitenfläche (108) mit der Kernschicht (40) verklebt sind.

5. Verbundplatte (10) nach einem der vorhergehenden Ansprüche,
wobei der Kabelkanal (100) einen ersten Längsabschnitt (110) und einen zweiten Längsabschnitt (112) aufweist;

6. Verbundplatte (10) nach Anspruch 5,
weiterhin aufweisend einen Knieverbinder (120);
wobei der Knieverbinder mit dem ersten Längsabschnitt (110) und dem zweiten Längsabschnitt (112) verbunden ist.

7. Verbundplatte (10) nach Anspruch 6,
wobei der Knieverbinder (120) einen ersten Verbindungsabschnitt (121), einen zweiten Verbindungsabschnitt (122) und einen zwischen dem ersten Verbindungsabschnitt (121) und dem zweiten Verbindungsabschnitt (122) angeordneten Mittelabschnitt (123) aufweist;
wobei der erste Verbindungsabschnitt (121) mit dem ersten Längsabschnitt (110) verbunden ist und der zweite Verbindungsabschnitt (122) mit dem zweiten Längsabschnitt (112) verbunden ist;
wobei der erste Verbindungsabschnitt (121) eine Mehrzahl von umlaufenden Ringen (124, 125) aufweist, welche sich in Umfangsrichtung um einen gesamten Umfang des Verbindungsabschnitts erstrecken.

8. Verbundplatte (10) nach einem der Ansprüche 5 bis 7,
weiterhin aufweisend einen dritten Längsabschnitt (114);
wobei der dritte Längsabschnitt (114) quer zu dem ersten Längsabschnitt (110) oder dem zweiten Längsabschnitt (112) verläuft und damit verbunden ist.

9. Verbundplatte (10) nach einem der vorhergehenden Ansprüche,
wobei in der Verbundplatte ein Faltschlitz (62) angeordnet ist, entlang dessen die Verbundplatte um einen bestimmten Faltwinkel gefaltet ist;
wobei der Kabelkanal (100) quer zu dem Faltschlitz (62) verläuft;
wobei an einem Kreuzungspunkt des Faltschlitzes mit dem Kabelkanal ein Faltlinienverbinder (130) angeordnet ist, der den Kabelkanal (100) von dem Faltschlitz (62) separiert.

10. Verbundplatte (10) nach Anspruch 9,
wobei in einer Oberfläche (22) der ersten Deckschicht (20) eine Vertiefung (24) mit einer Auflagefläche (46) angeordnet ist;
wobei ein Kragen (132) des Faltlinienverbinders (130) in der Vertiefung auf der Auflagefläche (46) aufliegt und mit der Oberfläche (22) der ersten Deckschicht (20) bündig abschließt.

## Claims

1. Composite panel (10), comprising:
a core layer (40);
a first cover layer (20) and a second cover layer (30);
a cable duct (100);
wherein the core layer is arranged between the first cover layer and the second cover layer and is connected to the first cover layer and the second cover layer;
wherein the composite panel (10) is a lightweight panel and the core layer (40) is designed to absorb compressive forces in the direction of the normal of the composite panel as well as forces resulting from deflection due to such compressive forces, and the first and second cover layers (20, 30) are designed to absorb tensile and compressive forces in the plane of the composite panel;
wherein a cavity (42) extends in the core layer (40);
wherein the cable duct (100) is arranged in the cavity (42);
wherein the cable duct (100) has a first side surface (102) and a second side surface (104) opposite the first side surface;
wherein the first side surface (102) is connected to the first cover layer (20);
wherein the second side surface (104) is connected to the second cover layer (30);
**characterized in that**
the cable duct (100) is designed as a square tube and is integrated into the composite panel;
the cavity (42) extends from a first edge (11) of the composite panel (10), referred to as the leading edge, to a second edge (12) of the composite panel (10), referred to as the trailing edge;
the cable duct (100) provides a guide from the leading edge to the trailing edge;
the entire first side surface (102) is in contact with the first cover layer (20);
the entire second side surface (104) is in contact with the second cover layer (30).

2. Composite panel (10) according to claim 1,
wherein the first side surface (102) is bonded directly to the first cover layer (20);
wherein the second side surface (30) is bonded directly to the second cover layer (30).

3. Composite panel (10) according to claim 1 or 2,
wherein the first side surface (102) and the second side surface (104) are planar.

4. Composite panel (10) according to any one of the preceding claims,
wherein the cable duct (100) has a rectangular cross-section;
wherein a third side surface (106) connects the first side surface (102) and the second side surface (104);
wherein a fourth side surface (108) is opposite the third side surface (106) and connects the first side surface (102) and the second side surface (104);
wherein the third side surface (106) and the fourth side surface (108) are bonded to the core layer (40).

5. Composite panel (10) according to any one of the preceding claims,
wherein the cable duct (100) has a first longitudinal section (110) and a second longitudinal section (112);

6. Composite panel (10) according to claim 5,
further comprising a knee connector (120);
wherein the knee connector is connected to the first longitudinal section (110) and the second longitudinal section (112).

7. Composite panel (10) according to claim 6,
wherein the knee connector (120) comprises a first connecting section (121), a second connecting section (122) and a center section (123) disposed between the first connecting section (121) and the second connecting section (122);
wherein the first connecting section (121) is connected to the first longitudinal section (110) and the second connecting section (122) is connected to the second longitudinal section (112);
wherein the first connecting section (121) comprises a plurality of circumferential rings (124, 125) extending circumferentially around an entire circumference of the connecting section.

8. Composite panel (10) according to any one of claims 5 to 7,
further comprising a third longitudinal section (114);
wherein the third longitudinal section (114) extends transversely to the first longitudinal section (110) or the second longitudinal section (112) and is connected thereto.

9. Composite panel (10) according to any one of the preceding claims,
wherein a folding slit (62) is arranged in the composite panel, along which the composite panel is folded by a specific folding angle;
wherein the cable duct (100) extends transversely to the folding slit (62);
wherein a fold line connector (130) is arranged at an intersection point of the folding slit with the cable duct, which separates the cable duct (100) from the folding slit (62).

10. Composite panel (10) according to claim 9,
wherein a recess (24) with a bearing surface (46) is arranged in a surface (22) of the first cover layer (20);
wherein a collar (132) of the fold line connector (130) rests in the recess on the bearing surface (46) and is flush with the surface (22) of the first cover layer (20).

## Revendications

1. Panneau composite (10), comprenant :
une couche centrale (40) ;
une première couche de revêtement (20) et une deuxième couche de revêtement (30) ;
un conduit de câbles (100) ;
dans lequel la couche centrale est disposée entre la première couche de revêtement et la deuxième couche de revêtement et est reliée à la première couche de revêtement et à la deuxième couche de revêtement ;
dans lequel le panneau composite (10) est un panneau léger et la couche centrale (40) est conçue pour absorber des forces de compression dans la direction des normales du panneau composite ainsi que des forces résultant d'une flexion due à de telles forces de compression, et les première et deuxième couches de revêtement (20, 30) sont conçues pour absorber des forces de traction et de compression dans le plan du panneau composite ;
dans lequel une cavité (42) s'étend dans la couche centrale (40) ;
dans lequel le conduit de câbles (100) est disposé dans la cavité (42) ;
dans lequel le conduit de câbles (100) comprend une première surface latérale (102) et une seconde surface latérale (104) opposée à la première surface latérale ;
dans lequel la première surface latérale (102) est reliée à la première couche de revêtement (20) ;
dans lequel la deuxième surface latérale (104) est reliée à la deuxième couche de revêtement (30) ;
**caractérisé en ce que**
le conduit de câbles (100) est conçu comme un tube carré et est intégré dans le panneau composite ;
la cavité (42) s'étend d'un premier bord (11), appelé bord d'entrée, du panneau composite (10) à un deuxième bord (12), appelé bord de sortie, du panneau composite (10) ;
le conduit de câbles (100) fournit un guidage depuis le bord d'entrée jusqu'au bord de sortie ;
la totalité de la première surface latérale (102) est en contact avec la première couche de revêtement (20) ;
la totalité de la deuxième surface latérale (104) est en contact avec la deuxième couche de revêtement (30).

2. Panneau composite (10) selon la revendication 1,
la première surface latérale (102) étant directement collée à la première couche de revêtement (20) ;
la deuxième surface latérale (30) étant directement collée à la deuxième couche de revêtement (30).

3. Panneau composite (10) selon la revendication 1 ou 2,
dans lequel la première surface latérale (102) et la deuxième surface latérale (104) sont planes.

4. Panneau composite (10) selon l'une quelconque des revendications précédentes,
dans lequel le conduit de câbles (100) ayant une section transversale rectangulaire ;
dans lequel une troisième surface latérale (106) relie la première surface latérale (102) et la deuxième surface latérale (104) ;
dans lequel une quatrième surface latérale (108) est opposée à la troisième surface latérale (106) et relie la première surface latérale (102) et la deuxième surface latérale (104) ;
dans lequel la troisième surface latérale (106) et la quatrième surface latérale (108) sont collées à la couche centrale (40).

5. Panneau composite (10) selon l'une quelconque des revendications précédentes,
dans lequel le conduit de câbles (100) comprend une première section longitudinale (110) et une seconde section longitudinale (112) ;

6. Panneau composite (10) selon la revendication 5,
comprenant en outre un connecteur de genou (120) ;
dans lequel le connecteur de genou est connecté à la première section longitudinale (110) et à la seconde section longitudinale (112).

7. Panneau composite (10) selon la revendication 6,
dans lequel le connecteur de genou (120) comprend une première section de connexion (121), une seconde section de connexion (122) et une section centrale (123) disposée entre la première section de connexion (121) et la seconde section de connexion (122) ;
dans lequel la première section de connexion (121) est connectée à la première section longitudinale (110) et la deuxième section de connexion (122) est connectée à la deuxième section longitudinale (112) ;
dans lequel la première section de connexion (121) comprend une pluralité d'anneaux circonférentiels (124, 125) qui s'étendent circonférentielle ment autour d'une circonférence entière de la section de connexion.

8. Panneau composite (10) selon l'une quelconque des revendications 5 à 7,
comprenant en outre une troisième section longitudinale (114) ;
dans lequel la troisième section longitudinale (114) s'étend transversalement à la première section longitudinale (110) ou à la deuxième section longitudinale (112) et est reliée à celles-ci.

9. Panneau composite (10) selon l'une quelconque des revendications précédentes,
dans lequel une fente de pliage (62) est disposée dans le panneau composite, le long de laquelle le panneau composite est plié selon un angle de pliage prédéterminé ;
dans lequel le conduit de câbles (100) s'étend transversalement à la fente de pliage (62) ;
dans lequel un connecteur de ligne de pliage (130) est disposé à un point d'intersection de la fente de pliage avec le conduit de câbles, lequel sépare le conduit de câbles (100) de la fente de pliage (62).

10. Panneau composite (10) selon la revendication 9,
dans lequel un renfoncement (24) avec une surface d'appui (46) étant disposé dans une surface (22) de la première couche de revêtement (20) ;
dans lequel une collerette (132) du connecteur de ligne de pliage (130) reposant dans le renfoncement sur la surface d'appui (46) et se terminant en affleurement avec la surface (22) de la première couche de revêtement (20).
